# EUROPEAN PATENT APPLICATION

(11) **EP 2 169 027 A1**
(43) Date of publication of application: **31.03.2010**
(21) Application number: 08165481.6
(22) Date of filing: 30.09.2008
(51) Int. Cl.: C09K 8/467, C04B 20/10, C04B 22/06

(54) **Carbonate-coated cement additives**

(71) Applicant: Services Pétroliers Schlumberger, 75007 Paris (FR); Schlumberger Technology B.V., 2514 JG The Hague (NL); Schlumberger Holdings Limited, Tortola (VG); PRAD Research and Development N.V., Road Town, Tortola (VG)
(72) Inventor: Michaux, Michel c/o Schlumberger Riboud Product Centre, 92142, Clamart (FR)
(74) Representative: Hyden, Martin Douglas

(57) **Abstract**

An additive to a cement system, which is capable of allowing expansion, at temperatures up to 280°C, of the cement system once the cement system has set, comprising magnesium oxide particles coated with magnesium carbonate. The process of creating the additive includes treating magnesium oxide with an aqueous solution and forming the carbonate coating.

## Description

### Technical Field

This invention relates to a cement system. In particular, it relates to an additive for a cement system of the type used in oil or gas wells, which is capable of allowing expansion of the cement system once the cement system has set. The invention is based on the use of metal oxide particles that have a carbonate coating.

### Background Art

During the construction of wells such as oil or gas wells, it is common to line some or all of the well with a tubular casing (typically steel) which is held in place with cement. Good bonding between the set cement and casing and between the set cement and the formation is important for effective zonal isolation. Poor bonding can limit production and reduce the effectiveness of stimulation treatments.

Communication between zones of the formation surrounding the well (no zonal isolation) can be caused by inadequate removal of drilling fluid (mud) used in the drilling of the well prior to cementing the casing in place; poor cement/formation bonding; expansion and contraction of the casing resulting from internal pressure or thermal stress; and cement contamination by drilling or formation fluids. Under such circumstances, a small gap or "microannulus" is frequently present at the cement/casing or the cement/formation interface.

Cement systems that expand slightly after setting have been proposed as a means of sealing microannuli and improving primary cementing results. The improved bonding is the result of mechanical resistance or tightening of the cement against the pipe and formation.

Most expansive well cement systems rely upon the formation of "secondary" ettringite (calcium trisulfoaluminate hydrate), after the cement has set. Ettringite crystals have a greater bulk volume than the components from which they form; consequently, expansion occurs because of the internal pressure exerted upon crystallization.

US5741357 discloses a hydraulic cement composition which utilizes, as part of an expansive component, coated particles of Calcium Aluminate Cement. The particles have a core of substantially unhydrated Calcium Aluminate Cement and an outer layer of hydration products of the core. The outer layer delays the reaction of the particles with other materials in the composition. The coated particles may be formed by partial hydration, drying and grinding of a mixture of Calcium Aluminate Cement powder with water. The Calcium Aluminate Cement can then react with gypsum and lime, which are also present in the cement composition, resulting in the formation of ettringite.

A major limitation of ettringite-based systems is their inability to provide significant expansion at elevated temperatures. Ettringite is stable up to about 80°C at atmospheric pressure.. The domain of stability of ettringite is extended up to about 120°C when the pressure is high as frequently experienced in oil and gas wells. Ettringite is not stable at higher temperatures and converts to a more dense calcium monosulfoaluminate hydrate and calcium sulphate (anhydrite).

In contrast to ettringite-based systems, expansive cement systems containing magnesium oxide can still function at curing temperatures as high as 280°C.

The hydration of magnesium oxide (MgO, "periclase") to magnesium hydroxide (Mg(OH)₂, "brucite") can provide an expansive force within a cement matrix. The hydrated material (i.e. brucite) occupies more space than that of the original material (i.e. periclase), leading to expansion.

MgO (periclase) + H₂O → Mg(OH)₂ (brucite)

The periclase must be calcined at temperatures between 1100°C and 1300°C, otherwise hydration occurs before the cement sets and no significant cement expansion is observed. Therefore, the magnesium oxide particles must only react with water once the cement has set and not during the "dormant" period where the cement slurry behaves as a liquid or a soft solid.

Presently, the only way to control the hydration rate of periclase is to adjust both its calcination temperature and particle size. The use of calcined periclase also releases magnesium ions as it is hydrated. This is often undesirable because magnesium ions can react with hydroxide ions present in the interstitial water of cement slurry to form a gel of magnesium hydroxide. The properties of cement slurry, for instance its rheology and thickening time, can be affected due to the adsorption of organic molecules (e.g., dispersant and retarder) onto this gel. The presence of magnesium ions may also be detrimental when other additives such as latex, which can flocculate, are present in the cement slurry.

This invention relates to a cement system. In particular, it relates to an additive for a cement system of the type used in oil or gas wells, which is capable of allowing expansion of the cement system once the cement system has set. The invention is based on the use of metal oxide particles that have a carbonate coating.

### Disclosure of Invention

A first aspect of the invention comprises a cement additive, comprising metal oxide particles which can react with water to produce an expanded phase, wherein the particles are coated with a corresponding metal carbonate,which has a very low solubility in water.

The metal oxide is preferably a divalent metal oxide, most preferably magnesium oxide or calcium oxide.

A second aspect of the invention comprises a method of making an additive according to the first aspect of the invention, comprising treating the metal oxide particles with an aqueous reagent so as to provide a coating thereon.

In one embodiment, the aqueous reagent preferably comprises water which partially hydrates the particles to form a coating of the corresponding metal hydroxide, the method further comprising exposing the partially-hydrated particles to carbon dioxide such that the metal hydroxide reacts to form the metal carbonate coating.

The method can further comprise drying the partially-hydrated particles in an organic solvent to remove excess water and prevent further hydration.

In another embodiment, the aqueous reagent comprises a metal carbonate solution, preferably an alkali carbonate solution preferably a sodium carbonate solution, which reacts with the metal oxide to form the carbonate coating. The method further comprises drying the coated particles with an organic solvent to stop the reaction between the metal carbonate solution and the metal oxide particles. The metal oxide particles can be partially hydrated before the addition of the metal carbonate solution.

A third aspect of the invention comprises a cement system comprising water and an additive according to the first aspect of the invention. The cement system preferably further comprises a hydraulic cement. The amount of additive can be selected to produce a predetermined degree of expansion on exposure to water when set.

Further aspects of the invention will be apparent from the following description.

### Mode(s) for Carrying Out the Invention

This invention is based on the use of a cement expansion additive comprising metal oxide (magnesium oxide) particles coated with the corresponding (magnesium) carbonate which can be added to a conventional hydraulic cement slurry.

A delayed rate of hydration of the magnesium oxide is achieved because the coating of magnesium carbonate has a very low solubility, thereby delaying the time at which the periclase begins to react with water to form the brucite. By controlling the thickness and permeability of the magnesium carbonate coat, the coated particles should not react extensively until the setting of cement.

There are several potential technical advantages to the use of this expansion additive. One is that for a given amount of additive, the degree of expansion of set cement should be higher because the encapsulated agent does not hydrate significantly before the setting of cement.

Another is that better control of the extent of expansion is expected. Too much expansion may result in cement cracking if the cement sheath is not sufficiently confined by the formation (i.e. if the formation is weak).

The use of this additive also results in the lessening of the amount of magnesium ions being released into the interstitial water of cement slurry during the first hours of hydration.

Two methods to coat the magnesium oxide particles with magnesium carbonate are described below.

In the first method, a coating of magnesium hydroxide is allowed to form on the magnesium oxide particles, and then the magnesium hydroxide coat is converted to magnesium carbonate. These reactions are summarized in the equations

MgO + H₂O → Mg(OH)₂

Mg(OH)₂ + CO₂ → MgCO₃ + H₂O

A given amount of magnesium oxide particles is dispersed under agitation in a given amount of water for a given time at a given temperature, allowing for a layer of magnesium hydroxide to form at the surface of the particles. This reaction takes place because the solubility of magnesium hydroxide is lower than that of magnesium oxide.

The partially hydrated particles are then filtered and dried with an organic solvent to remove the excess of water and to stop the reaction between the water and magnesium oxide, thereby allowing for the thickness of the magnesium hydroxide layer to be controlled. The dried material is then stored for a given time in an atmosphere containing a given concentration of carbon dioxide. The superficial layer of magnesium hydroxide converts into magnesium carbonate.

In the second method, a given amount of magnesium oxide particles is dispersed under agitation in a given amount of aqueous sodium carbonate solution for a given time at a given temperature. A layer of magnesium carbonate forms at the surface of magnesium oxide particles. The partially carbonated particles are filtered and dried with an organic solvent to stop the carbonation process.

Alternatively, the magnesium oxide particles can be hydrated in water before the addition of a given amount of carbonate salt (preferably sodium carbonate). This allows for the formation of the magnesium carbonate coat to be simplified, resulting in a cost reduction.

The best method depends on the desired thickness of the coating. The first method leads to the formation of generally thicker coats of magnesium carbonate, and the second leads to generally thinner coats.

The amounts of magnesium hydroxide and magnesium carbonate acquired by the above methods can be quantitatively measured using a thermogravimetric balance. The principle of thermogravimetric analysis (TGA) is to measure the weight loss of a sample as it is heated. In this instance, the weight losses are due to the water loss when magnesium hydroxide dehydrates into magnesium oxide, and to the carbon dioxide loss when magnesium carbonate is decomposed into magnesium oxide and carbon dioxide. These two reactions occur at different temperatures and, therefore, it is possible to quantify the amount of each phase if both magnesium hydroxide and magnesium carbonate are present in a sample. Thus by taking samples of batches of additive, it is possible to infer the behaviour of the additive in use.

Various changes may be made within the scope of the invention. For example, for low-temperature applications a blend of magnesium oxide (40 mass %) and calcium oxide (60 mass %) can be used to obtain faster expansion compared to pure magnesium oxide that is used for high-temperature applications. In the presence of water calcium oxide transforms into calcium hydroxide. As previously described for magnesium oxide, it should be possible to delay the time at which calcium oxide particles begin to hydrate by forming a thin and protective layer of calcium carbonate onto the surface of particles.

Magnesium oxide can also be used for "chemical cements", i.e. ones that do not contain hydraulic cement (e.g., Portland Cement, Calcium Aluminate Cement). Magnesium oxide particles can be dispersed in a concentrated magnesium chloride aqueous solution. After an induction period the material can harden due to the formation of magnesium oxychloride hydrates. Magnesium oxide or calcium oxide can also be used with phosphate aqueous solutions to form magnesium phosphate or calcium phosphate. It is not always easy to lengthen the thickening time of slurries made with these "chemical cements", especially with increased curing temperature. The principle discussed above may also be applied to decrease the hydration rate of magnesium oxide or calcium oxide in such systems.

## Claims

1. A cement additive, comprising metal oxide particles which can react with water to produce an expanded phase, wherein the particles are coated with a corresponding metal carbonate,which has a very low solubility in water.

2. An additive as claimed in claim 1, wherein the metal oxide comprises magnesium oxide or calcium oxide.

3. A method of making an additive as claimed in claim 1 or 2, comprising treating the metal oxide particles with an aqueous reagent so as to provide a coating thereon.

4. A method as claimed in claim 3, wherein the aqueous reagent comprises water which partially hydrates the particles to form a coating of the corresponding metal hydroxide, the method further comprising exposing the partially-hydrated particles to carbon dioxide such that the metal hydroxide reacts to form the metal carbonate coating.

5. A method as claimed in claim 3 or 4, further comprising drying the partially-hydrated particles in an organic solvent to remove excess water and prevent further hydration.

6. A method as claimed in claim 3, wherein the aqueous reagent comprises a metal carbonate solution which reacts with the metal oxide to form the carbonate coating.

7. A method as claimed in claim 6, wherein the metal carbonate solution is an alkali carbonate solution,

8. A method as claimed in claim 7, wherein the metal carbonate solution is a sodium carbonate solution.

9. A method as claimed in claim 6,7, or 8, further comprising drying the coated particles with an organic solvent to stop the reaction between the metal carbonate solution and the metal oxide particles.

10. A method as claimed in claim 6, 7, 8 or 9, comprising partially hydrating the metal oxide particles before the addition of metal carbonate.

11. A cement system comprising water and an additive as claimed in claim 1 or 2.

12. A cement system as claimed in claim 11, further comprising a hydraulic cement.

13. A cement system as claimed in claim 11 or 12, wherein the amount of additive is selected to produce a predetermined degree of expansion on exposure to water when set.
